Europäisches Patentamt

European Patent Office

Office européen des brevets

(19)

(11) Numéro de publication: **0 220 984 B1**

(12) **FASCICULE DE BREVET EUROPEEN**

(45) Date de publication du fascicule du brevet:
**17.01.90**

(21) Numéro de dépôt: **86402229.8**

(22) Date de dépôt: **08.10.86**

(51) Int. Cl.⁴: **G01M 3/02, F16L 55/10, F22B 37/02**

(54) **Système d'obturation pour conduit.**

(30) Priorité: **09.10.85 FR 8514968**

(43) Date de publication de la demande:
**06.05.87 Bulletin 87/19**

(45) Mention de la délivrance du brevet:
**17.01.90 Bulletin 90/3**

(84) Etats contractants désignés:
**BE CH DE ES FR GB IT LI NL SE**

(56) Documents cités:
**EP-A- 0 014 878**
**FR-A- 826 980**
**US-A- 2 064 569**
**US-A- 3 479 831**
**US-A- 4 518 015**

(73) Titulaire: **Société Industrielle PECQUET, TESSON, 183 avenue du Général Leclerc, F-78220 Viroflay (Yvelines)(FR)**

(72) Inventeur: **Chevasson, Alain, 8 bis, rue Pierre et Marie Curie, F-78140 Velizy-Villacoublay (Yvelines)(FR)**
Inventeur: **Foucquart, Daniel, 426 rue des Valentins, Bullion F-78830 Bonnelles (Yvelines)(FR)**

(74) Mandataire: **Bloch, Gérard et al, 2, square de l'Avenue du Bois, F-75116 Paris(FR)**

## Description

La présente invention a pour objet un système d'obturation pour conduit à surface intérieure sans prise, devant être essayé sous pression à partir d'une extrémité d'entrée ouverte.

Un tel système est utile, par exemple, pour la vérification périodique de la tenue en résistance par surpression des sécheurs-surchauffeurs de vapeur dans les centrales nucléaires. En effet, pour procéder à un essai de tenue en surpression d'un tel appareil, il est nécessaire d'obturer tout conduit qui débouche dans cet appareil et en particulier le conduit qui amène, en utilisation normale, la vapeur dans l'appareil. Comme il est important de vérifier, du même coup, la tenue en pression du raccord entre le sécheur-surchauffeur et ce conduit, l'obturation doit être faite dans le conduit au-delà de ce raccord, qui correspond donc sensiblement à l'extrémité ouverte du conduit permettant l'entrée du fluide sous pression, lors de l'essai. Dans la plupart des cas, il n'a pas été prévu de prise sur la surface intérieure du conduit, qui est donc, en général, lisse et brute de chaudronnerie.

Pour obturer un conduit à surface intérieure lisse, il est connu d'utiliser un système d'obturation essentiellement constitué d'une enveloppe gonflable, par exemple en caoutchouc, de forme sensiblement cylindrique lorsqu'elle est gonflée, et dont la paroi vient s'appuyer sur la surface intérieure lisse du conduit, sous l'effet de la pression d'un fluide avec lequel on gonfle l'enveloppe. Des anneaux d'étanchéité sont en général ménagés à l'extérieur des parois de l'enveloppe en contact avec la surface intérieure du conduit, afin d'assurer une bonne étanchéité. Si un tel système donne satisfaction dans le cas d'un conduit de diamètre modéré soumis à une différence de pression également modérée, il est inutilisable dans l'application décrite précédemment, concernant un essai de tenue en pression d'un sécheur-surchauffeur. En effet, dans ce cas, le diamètre du conduit à obturer est couramment de l'ordre de 1,20 m et la pression d'essai de l'ordre de 20 bars. Or, dans le cas d'un conduit de diamètre de 1,20m, la différence de pression maximale admise pour une enveloppe du type ci-dessus est de l'ordre de 0,3 bar. Pour des différences de pression supérieures, l'adhérence de l'enveloppe sur la surface intérieure du conduit n'est plus assurée, et une telle enveloppe ne peut donc convenir pour résoudre le problème posé.

On pourrait envisager, pour cefaire, de placer une paroi étanche à l'intérieur du conduit, un joint annulaire éventuellement gonflable étant placé entre les deux. Ceci nécessiterait le montage de fixations sur la surface intérieure du conduit, afin de maintenir la paroi en place avant l'essai et de l'immobiliser afin qu'elle ne se déplace pas sous l'action des forces exercées sur la paroi pendant l'essai. Or, pour des questions de sécurité, il n'est pas tolérable de prendre le risque d'une dégradation de la surface intérieure du conduit, qui doit rester, pendant et après la vérification,dans son état initial. De plus, une paroi d'obturation dimensionnée pour résister et ne pas se déformer sous l'action de telles contraintes serait très lourde et donc difficile à installer à l'intérieur du conduit, dans une position d'accès difficile car éloignée de l'extrémité d'entrée.

La présente invention vise à pallier les inconvénients précédents en procurant un système d'obturation pour conduit à surface intérieure sans prise, susceptible de résister à des pressions très élevées dans des conduits de grand diamètre, qui ne nécessite l'installation d'aucune fixation sur la surface intérieure du conduit, et facile à mettre en place.

La présente invention a pour objet, à cet effet, un système d'obturation pour conduit à surface intérieure sans prise, devant être essayé sous pression à partir d'une extrémité d'entrée ouverte, caractérisé par le fait qu'il comprend une paroi étanche disposée à l'intérieur du conduit, à distance de l'extrémité d'entrée, pour obturer le conduit, un joint annulaire disposé entre la paroi et la surface intérieure du conduit, des moyens, séparés de la paroi et reliés à elle par des moyens de liaison, pour la soutenir et l'empêcher de se déformer sous l'action de la pression, disposés à l'extérieur du conduit, avant son extrémité d'entrée.

Dans le système de l'invention, les moyens de soutien de la paroi étanche, qui rendent celle-ci susceptible de résister à des pressions élevées, étant placés à l'extérieur du conduit, avant son extrémité d'entrée, il est facile de les maintenir en place avant l'essai et de les immobiliser pendant l'essai sans dégrader la surface intérieure du conduit. Comme la paroi étanche en elle-même, séparée des moyens de soutien,peut être dimensionée pour être relativement légère, elle est facile à installer à l'intérieur du conduit.

Avantageusement, la paroi étanche est démontable.

Ainsi, dans le cas des sécheurs-surchauffeurs où l'intérieur du conduit à obturer n'est accessible que par un opérateur qui est passé par un trou de visite de diamètre réduit, il suffit de prévoir des éléments constitutifs de la paroi étanche manipulables à la main pour pouvoir utiliser le système de l'invention.

Dans la forme de réalisation préférée du système de l'invention, l'extrémité d'entrée du conduit est un plan de section droite du conduit, et les moyens de soutien de la paroi sont des poutres de soutien disposées parallèlement à ce plan, en appui sur l'extrémité d'entrée.

Dans ce cas, la force exercée sur la paroi étanche par la pression d'essai, lors de la vérification, est reportée, par l'intermédiaire des moyens de liaison et des poutres de soutien, sur l'extrémité du conduit lui-même. En général celui-ci est assez résistant pour qu'il ne soit pas nécessaire de prévoir d'autres moyens d'immobilisation pendant l'essai.

Le joint annulaire peut être un joint gonflable.

Alors des variations éventuelles de l'intervalle annulaire séparant la paroi de la surface intérieure du conduit peuvent être rattrapées sans difficultés lors du gonflage du joint.

La présente invention sera mieux comprise à l'aide de la description suivante de plusieurs formes de réalisation du système de l'invention, faites en se référant aux dessins annexés, sur lesquels :

- la figure 1 représente une vue de côté, en coupe, d'un système d'obturation,
- la figure 2 représente une vue de face de la paroi étanche du système de la figure 1, en cours de montage,
- la figure 3 représente une vue de dessus, en coupe, selon la ligne III-III, du système de la figure 1, en cours de montage,
- la figure 4 représente, dans sa moitié droite, une vue de face, partielle, des plaques en position de montage sur la paroi étanche de la figure 2, et dans sa moitié gauche, une vue de face, partielle, de la nappe d'étanchéité en position de montage sur la paroi étanche de la figure 2,
- la figure 5 représente un agrandissement du détail V de la figure 3, et,
- la figure 6 représente le détail VI de la figure 1 dans deux variantes de réalisation.

Le système d'obturation qui va maintenant être décrit est utilisé ici pour essayer périodiquement la tenue en pression d'un sécheur-surchauffeur de vapeur de centrale nucléaire, et d'une partie d'un conduit d'arrivée de vapeur raccordée à cet appareil.

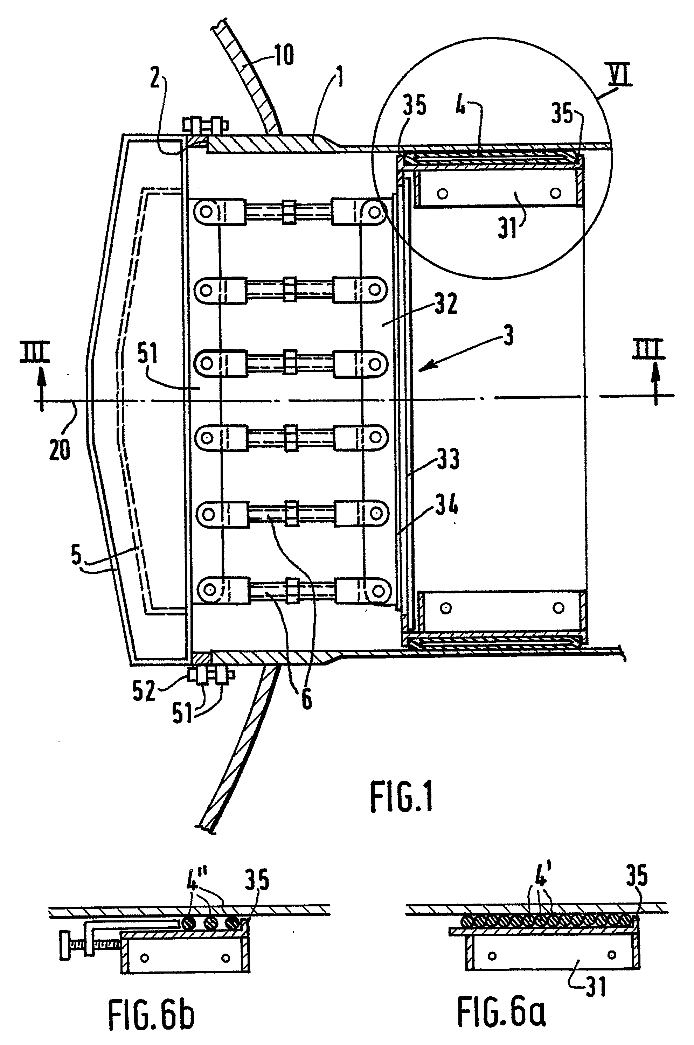

Sur les figures 1 à 4, seules les parties 10 du sécheur-surchauffeur raccordées à un conduit 1 d'axe 20, à obturer, sont représentées. La surface intérieure du conduit 1, lisse n'offre aucune prise. Le conduit 1 est en communication avec le sécheur-surchauffeur par son extrémité d'entrée 2, ouverte.

Une paroi étanche 3 est disposée à l'intérieur du conduit 1, à distance de l'extrémité d'entrée 2. Elle comprend une ceinture cylindrique rigide 31, un ensemble de poutrelles 32 montées sur la ceinture 31 et constituant, avec la ceinture 31, une armature rigide sur laquelle est monté un ensemble de plaques 33, de façon à réaliser une paroi continue.

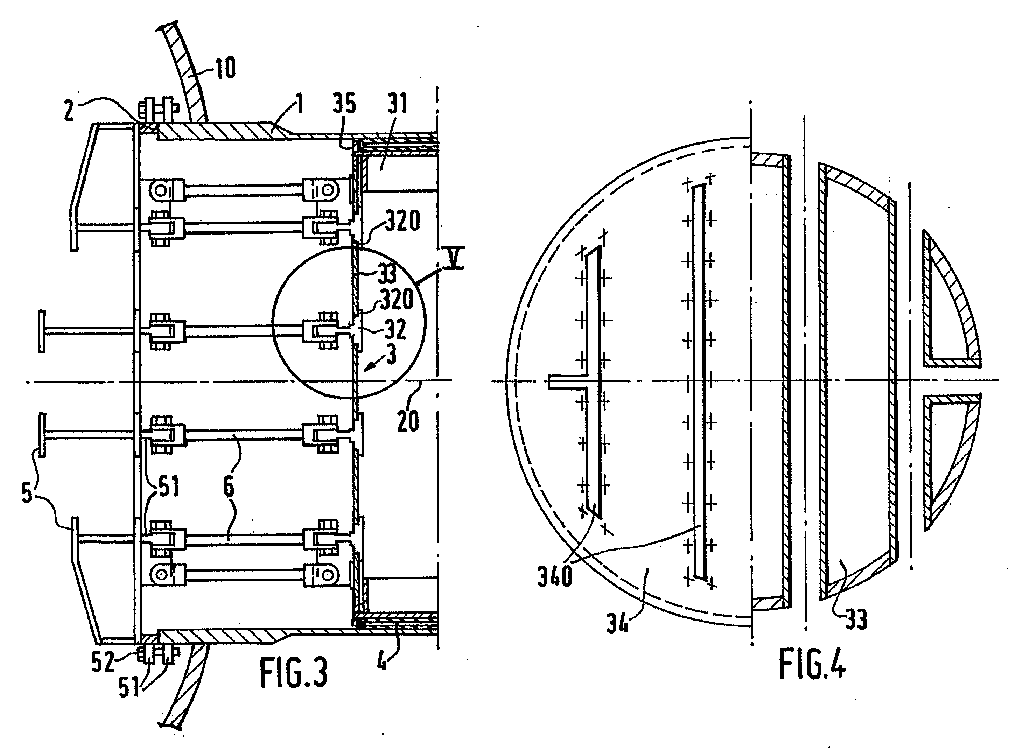

La ceinture cylindrique rigide 31 de la paroi étanche 3 est ici démontable et comprend un ensemble d'éléments sensiblement en forme d'arc de cercle, assemblés entre eux par des moyens connus comme par exemple, des boulons et des écrous. La ceinture cylindrique 31 est de dimensions telles qu'elle s'adapte avec un faible jeu à la section droite du conduit 1, l'intervalle entre les deux étant rempli, comme représenté sur les figures 1 et 3, par un joint annulaire creux 4, ici de section allongée parallèlement à l'axe 20 du conduit 1. Le joint annulaire creux 4 est gonflable à l'aide de moyens non représentés car classiques. Des collerettes 35, saillantes par rapport à la ceinture cylindrique 31, servent à précentrer le système dans la tuyauterie, et immobilisent le joint annulaire 4 dans des directions de déplacement parallèles à l'axe 20 du conduit 1.

Les poutrelles 32, dont la section est en forme de T, sont montées sur la ceinture 31, de façon à ce que leurs parties d'extrémités correspondant à la barre du T soient maintenues en contact avec la ceinture 31 à l'aide de moyens de montage connus, les parties correspondant à la jambe du T étant tournées vers l'extrémité d'entrée 2 du conduit 1.

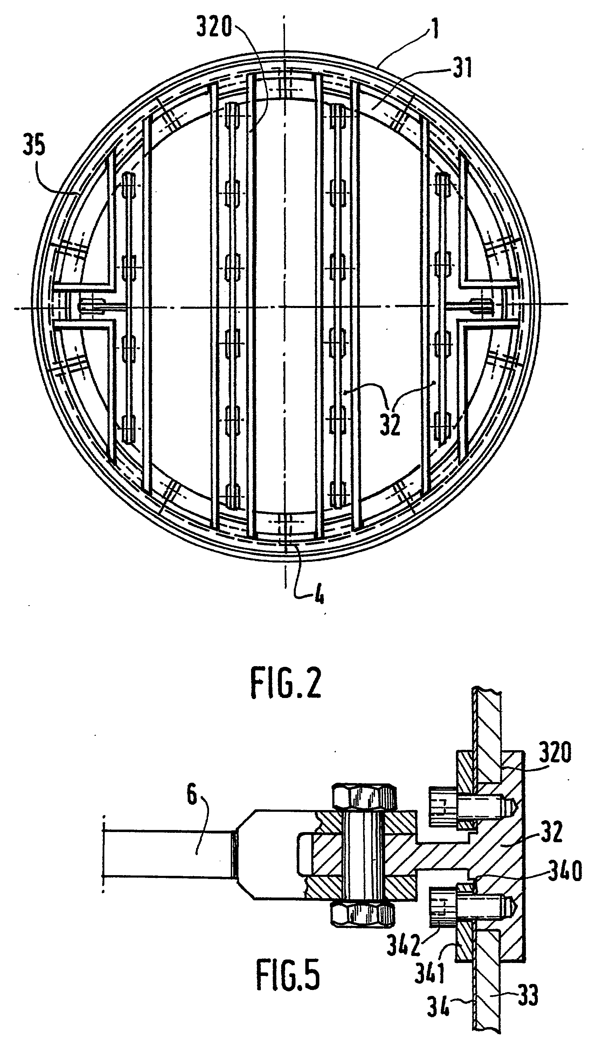

Les parties des poutrelles 32 correspondant à la barre du T, et tournées vers l'extrémité d'entrée 2 du conduit 1 comportent des décrochements 320 agencés pour recevoir les plaques 33, ici métalliques. La figure 2 représente la paroi 3 en cours de montage, avant la pose des plaques 33, en partie représentées dans leur position de montage sur la moitié droite de la figure 4. Sur cette figure les zones hachurées des plaques 33 correspondent aux zones en appui sur les décrochements 320.

Après pose des plaques, dans l'état représenté sur la figure 3, une nappe 34 déformable, ici en caoutchouc, est mise en place.

Dans la nappe 34 sont ménagées des ouvertures 340 destinées à dégager les parties des poutrelles 32 correspondant à la jambe du T, saillantes vers l'extrémité d'entrée 2 du conduit 1. La nappe 34, représentée partiellement sur la moitié gauche de la figure 4, est ainsi appliquée sur les parties plates de la paroi étanche 3 afin d'assurer une bonne étanchéité de celle-ci. La nappe 34, ainsi que les plaques 33, sont maintenues en place à l'aide de moyens connus, ici des plaques de retenue 341 et des vis 342, comme cela est représenté sur la figure 5.

Les parties saillantes, correspondant à la jambe du T des poutrelles 32 sont reliées, de façon connue, à des tirants réglables 6, eux aussi de type connu, et ces tirants 6 sont reliés à des poutres de soutien 5, disposés ici parallèlement au plan de section droite du conduit 1 qui coïncide avec son extrémité d'entrée 2, et en appui sur celle-ci.

Les poutres 5 sont maintenues en place sur l'extrémité d'entrée 2 à l'aide de moyens connus, ici de pattes 51 reliées par des vis 52, représentés sur les figures 1 et 3.

Les poutres de soutien 5 sont disposées parallèlement aux poutrelles 32, de façon à simplifier l'agencement des tirants réglables 6. Ici, comme cela est représenté sur la figure 3, les poutres 5 ont une section sensiblement en forme de H, une partie 51 prolongeant la barre centrale du H étant saillante vers la paroi 3, et reliée aux tirants réglables 6.

De manière classique, les poutres de soutien 5 ont une forme générale de palonnier, c'est-à-dire que leur section est plus large au centre qu'aux extrémités en appui sur l'extrémité d'entrée 2, ce qui allège leur poids.

Le système qui vient d'être décrit fonctionne comme suit. Le joint gonflable 4 est gonflé après sa mise en place et celle de la paroi étanche 3, facilitées par le fait que la paroi étanche 3, dont l'installation à l'intérieur du conduit et à distance de l'extrémité d'entrée 2 est relativement délicate, est relativement légère, puisqu'elle a pu être dimensionnée en tenant compte du fait qu'elle est soutenue, pendant l'essai de tenue en pression, par les poutres de soutien 5. Pour procéder à l'essai de tenue en pression, on admet dans le sécheur-surchauffeur de l'eau sous une pression de 20 bars. Du fait que l'intervalle entre la paroi étanche 3 et la surface intérieure du conduit 1 est faible, le joint gonflable 4 peut résister à une telle pression. L'étanchéité de la paroi 3 est assurée par la nappe 34 qui, sous l'action de la pression de l'eau est plaquée contre les poutres 32 et les plaques 33. Enfin, les forces résultant de la pression appliquée sur la paroi 3 sont transmises, par l'intermédiaire des tirants 6, aux poutres de soutien 5 qui empêchent la paroi 3 de se déformer, et l'immobilisent à l'endroit où elle a été montée. Les poutres de soutien 5 prennent appui sur l'extrémité d'entrée 2 du conduit 1, la résultante des forces dues à la pression d'essai étant appliquée dans la direction de l'axe 20. Ainsi les pattes 51 et la vis 52 ne sont soumises à aucun effort lié à la pression d'essai, et peuvent être dimensionnées uniquement pour maintenir en place les poutres de soutien 5 avant l'essai.

Lorsque l'essai est terminé, l'ensemble peut être démonté, et les parois 10 du sécheur-surchauffeur, ainsi que la surface intérieure du conduit 1 sont intactes, libres de toute dégradation liée à l'essai, à l'exception des pattes 51, qui, compte tenu de leur emplacement à l'intérieur de l'enceinte du sécheur, et de leurs faibles dimensions liées au fait qu'elles ne sont utiles que pour la mise en place, ne sont pas gênantes.

Dans la situation qui vient d'être décrite, on utilise le fait que le conduit 1 est pourvu d'une extrémité d'entrée 2 qui s'avance à l'intérieur de l'enceinte du sécheur, et qui correspond à un plan de section droite du conduit. Ceci est particulièrement commode pour que les poutres de soutien 5 prennent appui sur cette extrémité d'entrée 2 pendant l'essai de tenue en pression. Ceci n'est cependant pas obligatoire et, dans des situations différentes, où il n'est pas possible de bénéficier d'un tel avantage, le système de l'invention reste toujours intéressant, dans la mesure où les moyens de soutien et d'immobilisation de la paroi étanche, moyens nécessairement lourds et qui doivent être fixés solidement, sont placés à l'extérieur du conduit, donc dans un volume plus grand que celui du conduit, où il sera tou jours facile, pour un homme de métier, de trouver des prises pour l'immobilisation de ces moyens de soutien.

Dans la forme de réalisation qui vient d'être décrite, on utilise un joint gonflable 4, qui présente l'avantage de pouvoir compenser les variations éventuelles de l'intervalle annulaire séparant la paroi étanche 3 de la surface intérieure du conduit 1. Ceci n'est pas obligatoire, et dans une variante de réalisation illustrée sur la figure 6a, on utilise un ensemble de joints toriques 4', maintenus en place par une unique collerette 35 et susceptibles de se déformer sous l'effet de la pression, pour assurer une étanchéité satisfaisante. Dans une autre variante de réalisation illustrée sur la figure 6b, un ensemble de joints toriques 4" est comprimé, avant mise en pression, à l'aide d'un système connu de presse-étoupe. Ces joints toriques 4' et 4" peuvent être remplacés par tout autre type de joint, par exemple des tresses.

Le système de l'invention peut évidemment être utilisé pour des essais de tenue en résistance par pression, ou surpression, de tout type d'appareil avec tuyauterie débouchante, brute de chaudronnerie ou usinée, à l'aide de tout fluide, liquide ou gazeux.

## Revendications

1.- Système d'obturation pour conduit (1) à surface intérieure sans prise, devant être essayé sous pression à partir d'une extrémité d'entrée (2) ouverte, caractérisé par le fait qu'il comprend une paroi étanche (3) disposée à l'intérieur du conduit (1), à distance de l'extrémité d'entrée (2), pour obturer le conduit (1) un joint annulaire (4) disposé entre la paroi (3) et la surface intérieure du conduit (1), des moyens (5), séparés de la paroi (3) et reliés à elle par des moyens de liaison (6), pour la soutenir et l'empêcher de se déformer sous l'action de la pression, disposés à l'extérieur du conduit (1), avant son extrémité d'entrée (2).

2.- Système d'obturation selon la revendication 1, dans lequel la paroi étanche (3) est démontable.

3.- Système d'obturation selon l'une des revendications 1 et 2 dans lequel la paroi étanche (3) comprend une ceinture cylindrique rigide (31) agencée pour supporter le joint annulaire (4), un ensemble de poutrelles (32) montées sur la ceinture (31), un ensemble de plaques (33) montées sur les poutrelles (32) et la ceinture (31), et des moyens (34) pour assurer l'étanchéité de la paroi.

4.- Système d'obturation selon la revendication 3, dans lequel la paroi étanche (3) comprend des parties plates, et les moyens pour assurer l'étanchéité comprennent une nappe (34) déformable appliquée sur les parties plates de la paroi (3).

5.- Système d'obturation selon l'une revendications 3 et 4, dans lequel les poutrelles (32) ont une section sensiblement en forme de T, les plaques (33) étant montées sur les parties correspondant à la barre du T, et les parties correspondant à la jambe du T étant reliées aux moyens de liaison (6).

6.- Système d'obturation selon l'une des revendications 1 à 5, dans lequel l'extrémité d'entrée (2) du conduit (1) est un plan de section droite du conduit (1), et les moyens de soutien de la paroi sont des poutres de soutien (5) disposées parallèlement à ce plan, en appui sur l'extrémité d'entrée (2).

7.- Système d'obturation selon la revendication 6, dans lequel les poutres de soutien (5) ont une section sensiblement en forme de H, une partie (51) prolongeant la barre centrale du H étant saillante et reliée aux moyens de liaison (6).

8.- Système d'obturation selon l'une des revendications 6 et 7 dans lequel les poutres de soutien (5) ont une section plus large au centre qu'aux extrémités.

9.- Système d'obturation selon l'une des revendications 1 à 8, dans lequel les moyens de liaison sont des tirants réglables (6).

10.- Système d'obturation selon l'une des revendications 1 à 9, dans lequel le joint annulaire est un joint gonflable (4).

11.- Système d'obturation selon l'une des revendications 1 à 10, dans lequel la paroi (3) est pourvue, à sa périphérie, de moyens (35) agencés pour immobiliser le joint annulaire (4,4').

12.- Système d'obturation selon la revendication 11, dans lequel le joint annulaire comprend au moins un joint torique (4') plein, déformable sous l'effet de la pression.

13.- Système d'obturation selon la revendication 11, dans lequel le joint annulaire comprend au moins une tresse déformable sous l'effet de la pression

14.- Système d'obturation selon la revendication 11, dans lequel le joint annulaire comprend au moins un joint torique (4") plein, mis en compression à l'aide d'un système de presse-étoupe.

15.- Système d'obturation selon la revendication 11, dans lequel le joint annulaire comprend au moins une tresse, mise en compression à l'aide d'un système de presse-étoupe.

**Patentansprüche**

1. Absperreinrichtung für eine Innenfläche ohne Angriffsstelle aufweisende Leitung (1), die von einem offenen Eintrittsende (2) her einer Druckprüfung unterworfen werden soll, dadurch gekennzeichnet, daß sie eine undurchlässige Wand (3) aufweist, die mit Abstand von dem Eintrittsende (2) im Inneren der Leitung (1) angebracht ist, um die Leitung (1) abzusperren, daß zwischen der Wand (3) und der Innenfläche der Leitung (1) eine Ringdichtung (4) angebracht ist, und daß außerhalb der Leitung (1) vor deren Eintrittsende (2) eine von der Wand (3) getrennte Vorrichtung (5) angebracht ist, die an der Wand durch Verbindungsorgane (6) befestigt ist, um diese abzustützen und ihre Verformung unter Einwirkung des Druckes zu verhindern.

2. Absperreinrichtung nach Anspruch 1, bei der die undurchlässige Wand (3) demontierbar ist.

3. Absperreinrichtung nach einem der Ansprüche 1 und 2, bei der die undurchlässige Wand (3) einen starren Zylinderring (31), der zur Abstützung der Ringdichtung (4) dient, an dem Ring (31) befestigte Träger (32), an den Trägern (32) und an dem Ring (31) angebrachte Platten (33) und Elemente (34) umfaß, um die Dichtigkeit der Wand zu sichern.

4. Absperreinrichtung nach Anspruch 3, bei der die undurchlässige Wand (3) flache Teile enthält, wobei die Elemente zur Sicherung der Dichtigkeit eine verformbare Fläche (34) enthalten, die auf die flachen Teile der Wand (3) aufgelegt ist.

5. Absperreinrichtung nach einem der Ansprüche 3 und 4, bei der die Träger einen im wesentlichen T-förmigen Querschnitt haben, wobei die Platten (33) jeweils an den Schenkeln des T-Profils befestigt sind, während die Verbindungsorgane (6) an dem Mittelsteg des T-Profils befestigt sind.

6. Absperreinrichtung nach einem der Ansprüche 1 bis 5, bei der das Eintrittsende (2) der Leitung (1) eine Querschnittsfläche der Leitung (1) ist, wobei die Stützorgane der Wand Stützträger (5) sind, die parallel zu dieser Fläche angrenzend an das Eintrittsende (2) angeordnet sind.

7. Absperreinrichtung nach Anspruch 6, bei der die Stützorgane (5) einen im wesentlichen H-förmigen Querschnitt haben, wobei ein in der Verlängerung des Mittelsteges des H-Profils liegender Abschnitt (51) vorspringt und an den Verbindungsorganen (6) befestigt ist.

8. Absperreinrichtung nach einem der Ansprüche 6 und 7, bei der die Stützträger (5) in ihrer Mitte einen größeren Querschnitt haben als an ihren Enden (9).

9. Absperreinrichtung nach einem der Ansprüche 1 bis 8, bei der die Verbindungselemente verstellbare Spannstangen (6) sind.

10. Absperrvorrichtung nach einem der Ansprüche 1 bis 9, bei der die Ringdichtung eine aufblasbare Dichtung (4) ist.

11. Absperrvorrichtung nach einem der Ansprüche 1 bis 10, bei der die Wand (3) an ihrem Umfang mit Organen (35) zum Festhalten der Ringdichtung (4, 4') versehen ist.

12. Absperreinrichtung nach Anspruch 11, bei der die Ringdichtung ein massiver O-Dichtring (4') ist, der unter Druckeinwirkung verformbar ist.

13. Absperreinrichtung nach Anspruch 11, bei der die Ringdichtung mindestens eine unter Druckeinwirkung verformbare Schnur ist.

14. Absperreinrichtung nach Anspruch 11, bei der die Ringdichtung mindestens ein massiver O-Ring (4") ist, der mittels eines Stopfbüchsensystems zusammengedrückt ist.

15. Absperreinrichtung nach Anspruch 11, bei der die Ringdichtung mindestens eine Schnut umfaßt, die mittels eines Stopfbüchsensystems zusammengedrückt ist.

**Claims**

1. A closure system for a conduit (1) having a gripless inner surface, to be tested under pressure from an open inlet end (2), characterized in that it includes a sealing wall (3) disposed inside the conduit (1), at a distance from the inlet end (2), for closing the conduit (1), an annular seal (4) disposed between the wall (3) and the inner surface of the conduit (1), means (5) separated from the wall (3) and connected thereto by connecting means (6), for supporting it and preventing it from being deformed under the action of the pressure, disposed outside the conduit (1), before its inlet end (2).

2. The closure system as claimed in claim 1, wherein said sealing wall (3) is demountable.

3. The closure system as claimed in one of the claims 1 and 2 wherein said sealing wall (3) has a rigid cylindrical girdle (31) adapted for supporting the annular seal (4), an assembly of bars (32) mounted on said girdle (31), an assembly of plates (33) mounted on the bars (32) and the girdle (31) and means (34) for sealing the wall.

4. The closure system as claimed in claim 3, wherein said sealing wall (3) includes flat parts and the sealing means include a deformable sheet (34) applied to the flat parts of the wall (3).

5. The closure system as claimed in claim 3 or 4, wherein said bars (32) have a substantially T shaped section, the plates (33) being mounted on the parts corresponding to the cross-piece of the T and the parts corresponding to the shank of the T being connected to the connecting means (6).

6. The closure means as claimed in one of claims 1 to 5, wherein the inlet end (2) of the conduit (1) is in a cross sectional plane of the conduit (1) and the means supporting the wall are support beams (5) disposed parallel to this plane, bearing against the inlet end (2).

7. The closure system as claimed in claim 6, wherein said support beams (5) have a substantially H section, a part (51) extending the central crosspiece of the H projecting and being connected to said connecting means (6).

8. The closure system as claimed in claim 6 or 7 wherein said support beams (5) have a section larger at the center than at the ends.

9. The closure system as claimed in one of the claims 1 to 8, wherein said connecting means are adjustable tierods (6).

10. The closure system as claimed in one of the claims 1 to 9, wherein said annular seal is an inflatable seal (4).

11. The closure system as claimed in one of the claims 1 to 10, wherein the wall (3) is provided, at its periphery, with means (35) adapted for immobilizing said annular seal (4, 4′).

12. The closure system as claimed in claim 11, wherein said annular seal includes at least one solid O seal (4′) deformable under the effect of the pressure.

13. The closure system as claimed in claim 11, wherein said annular seal includes at least one braided packing deformable under the effect of the pressure.

14. The closure system as claimed in claim 11, wherein said annular seal includes at least one solid O seal (4″), compressed by means of a packing system.

15. The closure system as claimed in claim 11, wherein said annular seal includes at least one braided sealing means compressed by means of a packing system.

FIG.1

FIG.6b

FIG.6a

FIG.2

FIG.5

FIG.4

FIG.3